Europäisches Patentamt

European Patent Office

Office européen des brevets

(19)

(11) Publication number: **0 089 655**

**A1**

(12) # EUROPEAN PATENT APPLICATION

(21) Application number: **83102736.2**

(22) Date of filing: **19.03.83**

(51) Int. Cl.³: **C 03 C 13/00**
**G 02 B 5/14, C 03 C 3/18**

(30) Priority: **24.03.82 GB 8208693**

(43) Date of publication of application:
**28.09.83 Bulletin 83/39**

(84) Designated Contracting States:
**AT BE CH DE FR IT LI**

(71) Applicant: **International Standard Electric Corporation**
**320 Park Avenue**
**New York New York 10022(US)**

(72) Inventor: **Byron, Kevin Christopher**
**8 Jervis Road**
**Bishop's Stortford Hertfordshire(GB)**

(74) Representative: **Graf, Georg H., Dipl.-Ing. et al,**
**c/o Standard Elektrik Lorenz AG Patent- und**
**Lizenzwesen Postfach 300 929 Kurze Strasse 8**
**D-7000 Stuttgart 30(DE)**

(54) **Single mode optical fibre.**

(57) Designs of fluoride glass optical fibre are disclosed which exhibit substantially zero total dispersion over a band of wavelengths.

$(62\,HFF_4 - 33\,BaF_2 - 5\,LaF_3)$    $\Delta n = 20 \times 10^{-3}$
$D = 5.8\,\mu m$

FIG.2

EP 0 089 655 A1

K.C.Byron-3

## Single Mode Optical Fibre

The invention relates to a single mode optical fibre as set forth in the preamble of claim 1.

The two main dispersive mechanisms in a single mode optical fibre are the waveguide dispersion and the material dispersion. There is also the profile dispersion, but in practical optical fibres its contribution to the total dispersion is negligible in comparison with the other two contributors. Typically material dispersion increases monotonically with wavelength over the range of practical use, while waveguide dispersion decreases monotonically. There is in general a wavelength at which the contribution of material dispersion goes through zero, and another wavelength at which the contribution of waveguide dispersion goes through zero. These two wavelengths are not normally the same.

The material dispersion characteristic, and its wavelength of zero dispersion is determined principally by the bulk properties of the glass, but also depends to a limited extent upon the fibre geometry. For example, in a typical germania doped silica fibre, the wavelength of zero material dispersion is 1,31 $\mu$m at a core diameter

ZT/P1-Kg/R

March 17, 1983

K.C.Byron-3

of 8 μm, and is at 1,30 μm at core diameter of 4 μm.

The waveguide dispersion is however, more strongly dependent upon the fibre material properties and the core diameter, and both the slope of the waveguide dispersion characteristic and the wavelength at which it falls to zero can be altered by making changes to the core diameter and to the core cladding refractive index difference. Changes in refractive index difference have a primary effect upon the slope, while changes in core diameter have a primary effect upon the absolute magnitude. In germania doped silica fibres the dependence of the waveguide dispersion upon fibre geometry provides a measure of flexibility in designing a fibre for minimal total dispersion at any particular wavelength in the range 1.3 to 1.6 μm.

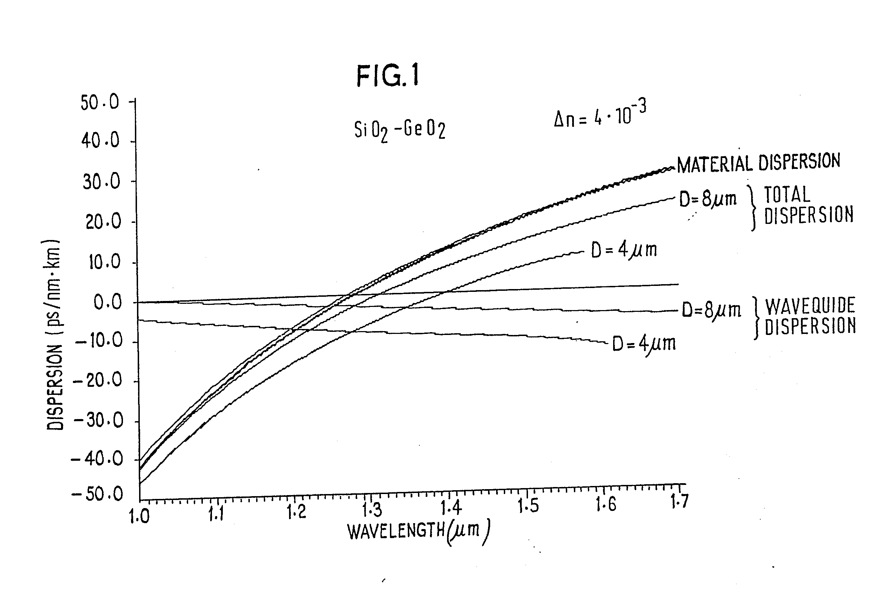

Figure 1 shows typical examples of the dispersion characteristics of germania doped silica fibres having an index difference of $4 \cdot 10^{-3}$ and core diameters of 4 and 8 μm respectively. It is seen from these characteristics that as the core diameter decreases in magnitude, the wavelength of zero total dispersion advances to longer wavelengths.

An analysis of the germania doped silica system reveals that for practical designs of optical fibre the modulus of the first derivative (with respect to wavelength) of the material dispersion is typically not less than 100 ps/ nm·km·μm, whereas the corresponding modulus of the first derivative of the waveguide dispersion is typically not greater than 50 ps/ nm·km·μm. This means that zero total dispersion for any particular design of fibre occurs within this glass system at one specific wavelength only.

K.C.Byron-3

The object of the invention is to provide an optical fibre for which substantially zero total dispersion occurs over a wavelength band rather than at a single wavelength.

This object is attained as set forth in claim 1. Preferred embodiments are apparent from the subclaims.

The invention is based on the fact that compared with the germania doped silica system there are glass systems possessing a much smaller first derivative of material dispersion in the region of not more than 50 ps/ nm·km·$\mu$m

An example of such a glass system is the fluoride glass ($ZrF_4$-$BaF_2$-$AlF_3$-$LaF_2$) described by L. Jeunhomme et al, in Elect. Letts. 1981 17 No. 21 p.808, which has a first derivative (with respect to wavelength) of the material dispersion of about 36 ps/nm·km·$\mu$m at the wavelength of zero material dispersion.

There follows a description of illustrative examples of embodiments of the present invention. The description refers to the accompanying drawings in which:

Figure 1 depicts the dispersion characteristics of two typical germania doped silica fibres showing zero total dispersion at particular wavelengths.

Figure 2 depicts the dispersion characteristics of a particular fluoride glass optical fibre showing zero total dispersion over a wavelength band, and

Figure 3 depicts the dispersion characteristics of certain fibres made from the same glass as the fibre of Figure 2.

K.C.Byron-3

Glass systems for which practical optical fibres exhibit a first derivative of material dispersion of less than 50 ps/ nm-km-$\mu$m  are the halide glasses. In particular it is found that optical fibres made from fluoride glasses in general typically have first derivatives of material dispersive in the range 30 to 50 ps/nm·km·$\mu$m. Thus the first derivative of material dispersion of the glass with the molar percentage constituents 62 $HfF_4$-33 $BaF_2$-5 $LaF_3$ is found to be 34 ps/ nm·km·$\mu$m , and with this glass it is calculated that the total waveguide dispersion is zero over a wavelength band extending from approximately 1,9 $\mu$m to 3,1 $\mu$m for a 5,8 $\mu$m core fibre with an index difference of $20 \cdot 10^{-3}$.

These results were obtained using the following approximate expressions for material dispersion $T_m$ and waveguide dispersion $T_w$:-

$$T_m = \frac{\lambda}{c} \cdot \frac{d^2 n_1}{d\lambda^2}$$

$$T_w = \frac{(n_1^2 - n_2^2)}{2n_2 \, c\lambda} \cdot V \cdot \frac{d^2(Vb)}{dV^2}$$

where $V \cdot \dfrac{d^2(Vb)}{dV^2}$  is obtained from the analytical expression derived by Huang Hung-Chia et al. Elect. Letts. 1981 17 No.5 p. 202.

The values for refractive index difference and core diameter are obtained by heuristic approximation, starting by determining a value of refractive index

K.C.Byron-3

difference that provides the required slope of waveguide dispersion characteristic to balance the slope of the material dispersion characteristic, and then determining the value of core diameter that balances the magnitude of the waveguide dispersion characteristic against that of the material dispersion characteristic.To produce slopes of waveguide dispersion characteristic in the region of -35 ps/nm·km·$\mu$m the required refractive index difference is likely to be in the region of $20 \cdot 10^{-3}$, with an increase in refractive index difference producing a characteristic with a steeper slope.

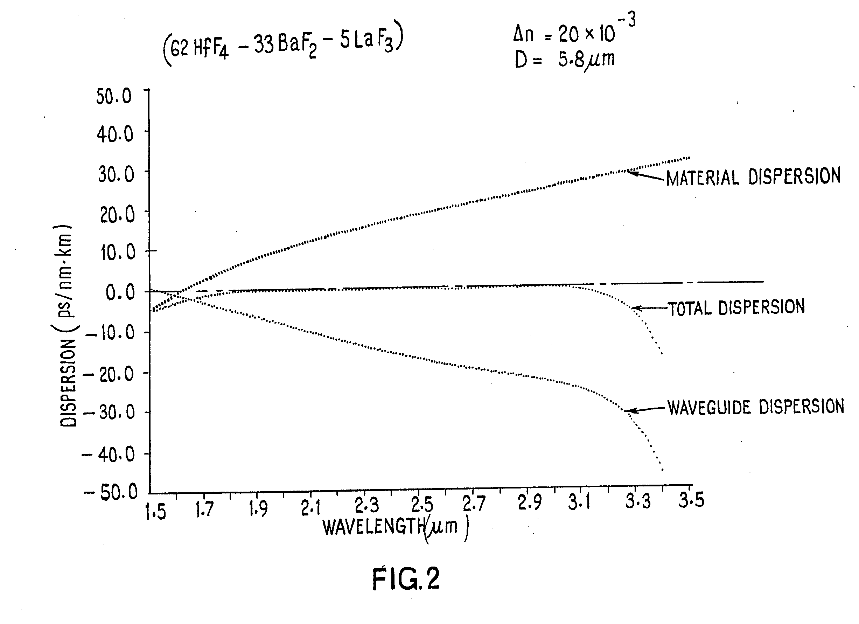

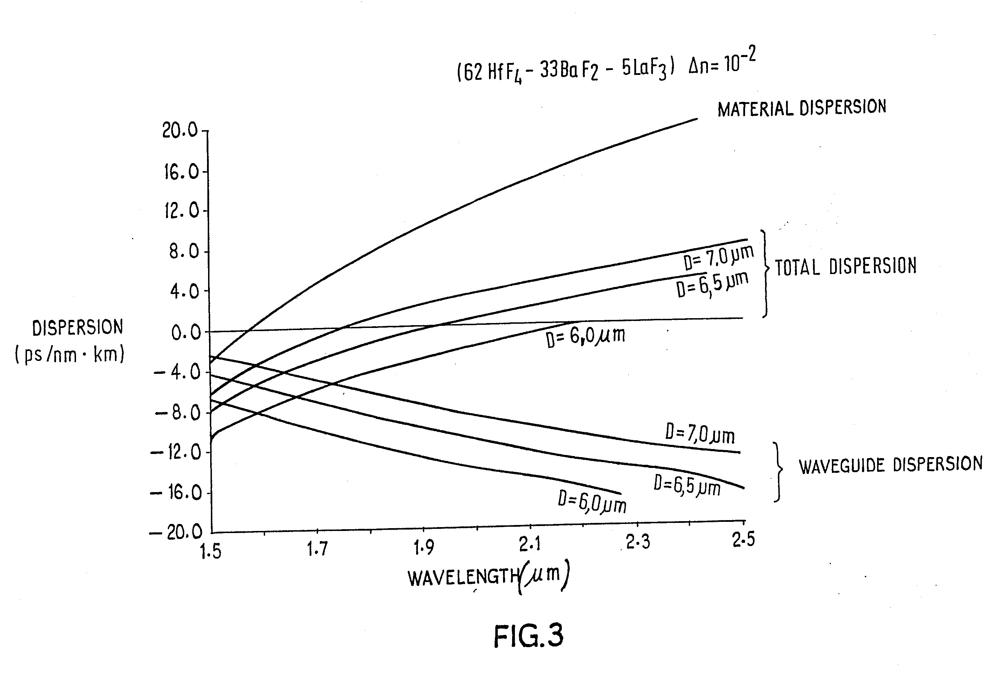

Similarly the required core diameter is likely to be in the range 3 to 10 $\mu$m, with the modulus of the waveguide dispersion being reduced by an increase in core diameter. This dependence on core diameter is illustrated in Figure 3 which shows the dispersion characteristics for core diameters of 6, 6,5 and 7 $\mu$m respectively for an index difference of $10^{-2}$ for fibres made of the same glass as the fibre of Figure 2.

The requisite index difference is obtained in conventional way by doping. This doping may be with a dopant which raises the refractive index in which case it is applied to the material forming the optical core, or it may be with a dopant which depresses the refractive index in which case it is applied to the material forming the optical cladding. Typical index raising dopants for fluoride glasses are fluorides of lead and bismuth, while those that depress the index include fluorides of aluminium and lithium .

K.C.Byron-3

By way of further example the appropriate parameters for zero total dispersion over a band of wavelengths for an optical fibre made of glass having the molar percentage constituents $64ZrF_4$-$33BaF_2$-$4GdF_3$ are a refractive index difference of $20 \cdot 10^{-3}$ and a core diameter of 5,7 $\mu$m.

Corresponding parameters for designing an optical fibre made from the above mentioned fluoride glass described by Jeunhomme et al. are a refractive index difference of $18 \cdot 10^{-3}$ and a core diameter of 6,0 $\mu$m.

INTERNATIONAL STANDARD ELECTRIC
CORPORATION, NEW YORK

K.C.Byron-3

Claims:

1. A single mode optical fibre having a core and a cladding, c h a r a c t e r i z e d in that it is made of a material whose composition is such that at the wavelength of zero material dispersion the first derivative with respect to wavelength of its material dispersion is substantially constant and has a value of less than 50 ps/mm·km·μm and that it has a waveguide dispersion whose magnitude substantially balances that of the material dispersion over a band of wavelengths so as to provide the fibre with substantially zero total dispersion over that wavelength band.

2. A single mode optical fibre as claimed in claim 1 characterized in that the wavelength band of substantially zero dispersion is of the order of 1 μm in width.

3. A single mode fibre as claimed in claim 1 or 2, characterized in that the fibre is made of a halide glass.

4. A single mode fibre as claimed in claim 3, characterized in that the fibre is made of a fluoride glass.

5. A single mode fibre as claimed in claim 4, characterized in that it is made of a glass with the molar per-

ZT/P1-Kg/R
March 17, 1983

K.C.Byron-3

centage constituents $62HfF_4-33BaF_2-5LaF_3$, that its core diameter is 5,8 $\mu$m and that its core cladding refractive index difference is $20 \cdot 10^{-3}$.

6.  A single mode fibre as claimed in claim 4, characterized in that it is made of a glass with the molar percentage constituents $63ZrF_4-33BaF_2-4GdF_3$, that its core diameter is 5,7 $\mu$m and that its core cladding refractive indes difference is $20 \cdot 10^{-3}$.

7.  A single mode fibre as claimed in claim 4, characterized in that it is made of a glass with the constituents $ZrF_4-BaF_2-AlF_3-LaF_2$, that its core diameter is 6,8 $\mu$m and that its core cladding refractive index difference is $18 \cdot 10^{-3}$.

FIG.1

$(62 HfF_4 - 33 BaF_2 - 5 LaF_3)$

$\Delta n = 20 \times 10^{-3}$
$D = 5.8 \mu m$

MATERIAL DISPERSION

TOTAL DISPERSION

WAVEGUIDE DISPERSION

DISPERSION $\left( ps/nm \cdot km \right)$

WAVELENGTH $(\mu m)$

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X,D | ELECTRONICS LETTERS, vol. 17, no. 21, 15th October 1981, pages 808-809; L.JEUNHOMME et al.: "Material dispersion evaluation in a fluoride glass" *Page 808, right-hand column: "glass preparation" 1st paragraph; page 809, left-hand column: "Discussion" and figure 1* | 1-4,7 | C 03 C   13/00<br>G 02 B    5/14<br>C 03 C    3/18 |
| Y | JAPANESE JOURNAL OF APPLIED PHYSICS, vol. 19, no. 6, June 1980, pages L313-L314, Tokyo JP; S.MITACHI et al.: "Fluoride glass fiber for infrared transmission". *Page L313, left-hand column, paragraphs 2,3, right-hand column, lines 3-17; page L314, figure 2, right-hand column, lines 1-3* | 6 | |
| | | | **TECHNICAL FIELDS SEARCHED (Int. Cl. ³)** |
| Y | LASER FOCUS, vol.16, no. 10, October 1980, pages 62-68, Newton, MA USA; M.G.DREXHAGE et al.: "IR-transmitting fluoride glasses" *Page 62, left-hand column, paragraph 1; page 66, table 1, "HBL" and figure 5* | 5 | C 03 C   13/00<br>G 02 B    5/00<br>C 03 C    3/00 |

--- -/-

The present search report has been drawn up for all claims

| Place of search | Date of completion of the search | Examiner |
|---|---|---|
| THE HAGUE | 20-06-1983 | BOUTRUCHE J.P.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

European Patent Office

**EUROPEAN SEARCH REPORT**

**0089655**

Application number

EP 83 10 2736

Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y,P | PHYSICS AND CHEMISTRY OF GLASSES, vol. 23, no. 6, December 1982, pages 190-195, Huddersfield GB; S.MITACHI: "Fluoride glasses in the $BaF_2$-$GdF_3$-$ZrF_4$ system for optical fibres transmitting in the midinfrared" *Page 190, right-hand column, "Glass preparation"; page 193, left-hand column, "Material dispersion", lines 1-5, right-hand column, lines 1-7, table 2; page 194, the whole left-hand column, figure 11* | 1,6 | |
| Y,P | CHEMICAL ABSTRACTS, vol. 97, no. 6, August 1982, page 240, no. 42796x, Columbus Ohio USA; T.MANABE: "Fluoride glasses for infrared optical fibers" & SERAMIKKUSU 1982, 17(4), 271-7. *Abstract* | 5 | TECHNICAL FIELDS SEARCHED (Int. Cl. 3) |
| A | ELECTRONIC LETTERS, vol. 15, no. 23, November 1979, pages 765-767; C.T.CHANG: "Minimum dispersion at 1.55 mum for single-mode step-index fibres" *Page 765, table 1, page 766, figure 4, left-hand column, paragraph 2* | 5 | |

The present search report has been drawn up for all claims

| Place of search | Date of completion of the search | Examiner |
|---|---|---|
| THE HAGUE | 20-06-1983 | BOUTRUCHE J.P.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82